(19) Europäisches Patentamt
European Patent Office
Office européen des brevets

(11) **EP 4 524 643 A1**

(12) **EUROPEAN PATENT APPLICATION**
published in accordance with Art. 153(4) EPC

(43) Date of publication:
**19.03.2025 Bulletin 2025/12**

(21) Application number: **23803406.0**

(22) Date of filing: **24.04.2023**

(51) International Patent Classification (IPC):
**G02B 27/09** (2006.01)

(52) Cooperative Patent Classification (CPC):
**G02B 3/04; G02B 13/00; G02B 27/09**

(86) International application number:
**PCT/JP2023/016072**

(87) International publication number:
**WO 2023/218924 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.05.2022 JP 2022079234**

(71) Applicant: **TekJP, Inc.
Tokyo 157-0072 (JP)**

(72) Inventors:
• **KASAHARA, Takeshi
Tokyo 157-0072 (JP)**
• **MATSUI, Hiroshi
Tokyo 157-0072 (JP)**

(74) Representative: **Kiwit, Benedikt
Mitscherlich PartmbB
Patent- und Rechtsanwälte
Karlstraße 7
80333 München (DE)**

(54) **NARROW BEAM GENERATING DEVICE**

(57)    Provided is a narrow beam generating device that can generate a linear narrow beam having a diameter of a prescribed size or less, on the basis of light emitted from a light source, independent of the distance from the position at which the light is emitted. The narrow beam generating device comprises: a light source; a light condensing means for collimating or condensing divergent light rays from the light source within a prescribed three-dimensional angle range; a first ray concentrating means for concentrating at least a portion of the rays emitted from the light condensing means into an area narrower than the incident beams of light; and a second ray concentrating means for concentrating the rays emitted from the first ray concentrating means as a linear narrow beam. Both the first and second ray concentrating means are optical elements or optical systems that are odd-order aspherical, the second ray concentrating means is located at a position where the rays are concentrated by the first ray concentrating means, and the first ray concentrating means and the second ray concentrating means have different shapes.

FIG. 1

EP 4 524 643 A1

**Description**

TECHNICAL FIELD

The present invention relates to a narrow beam generating device.

BACKGROUND ART

In the past, projectors and display devices using light sources such as laser light emitting devices have been known. For example, an integrated photonics module has been disclosed which includes one or more light sources such as lasers, a beam shaping optical element, a coupling optical element, a MEMS scanner, and one or more mechanical components such as an optical frame, to facilitate installation and maintain optical arrangement (see, for example, Patent Document 1).

In addition, in recent years, glasses-type display devices have emerged which can put images of virtual reality called XR, such as AR, MR, and VR, into the field of view. In particular, a laser scanning scheme that is a display scheme called laser beam steering (LBS) is applicable to retinal scan displays, so that even people with poor eyesight can see clear images (see, for example, Patent Document 2).

As a means for adjusting a beam diameter and light intensity distribution of a laser beam emitted from a semiconductor laser, there is disclosed a technology in which a pair of two axicon prisms that are equal in vertex angle are located with their bottom faces facing each other with an interval therebetween being adjustable along an optical axis (see, for example, Patent Document 3).

Citation List

Patent Document

Patent Document 1: Japanese Unexamined Patent Application (Translation of PCT Application), Publication No. 2009-533715
Patent Document 2: Japanese Unexamined Patent Application, Publication No. H11-064782
Patent Document 3: Japanese Unexamined Patent Application, Publication No. H10-239632

DISCLOSURE OF THE INVENTION

Problems to be Solved by the Invention

In the conventional technologies, it was possible to obtain narrow beam light only at a focal position or in a short region before and after the focal position. Accordingly, in a case of using the narrow beam light for laser plotting or cutting processing, it was necessary to accurately place a target at the focal position, and this requires a transport mechanism and a focus mechanism for focusing to be complex and precise, resulting in increase in size of the structure of an entire apparatus. In coupling laser light into an optical fiber, beam light was conventionally input into an end face of an optical fiber by focusing the beam light using a coupling lens, although coupling loss was generated due to angles of divergence from a coupling point, and this caused an issue that when, for example, laser diode light was input into a single-mode fiber (with a core diameter of 3 $\mu$m), the coupling efficiency which could be obtained was as low as roughly 30%.

In order to suitably implement devices, such as a retinal scan display as disclosed in Patent Document 2, it is necessary to project a high-precision image on an extremely small area called a retina. Therefore, beams that scan the retina preferably have an extremely small diameter (e.g., about 20 $\mu$m). However, in the conventional technology, it was not possible to form a Gaussian beam as a parallel beam with a diameter of about 300 $\mu$m or less, and therefore spot beams condensed at specific distances were used as alternative means. The spot beams, which have extremely small beam diameters in specific distances, have large beam diameters at positions before and after the focal distance. Accordingly, since the distance for images to reach the retina in the glasses-type display devices is different for each wearer of the glasses due to individual differences, there was an issue that a fine adjustment mechanism was necessary for adjusting the distance.

The present invention has been made in view of the above-stated circumstances, and an object of the present invention is to provide a narrow beam generating device that can generate a linear narrow beam having a diameter of a prescribed size or less, on the basis of light emitted from any light source, independent of the distance from an emission position.

Means for Solving the Problems

(1) The present invention relates to a narrow beam generating device, the narrow beam generating device including: a light source; a light condensing means for collimating divergent light rays from the light source or condensing the divergent light rays within a prescribed three-dimensional angle range; a first ray concentrating means for concentrating at least a portion of rays emitted from the light condensing means into an area narrower than incident light flux; and a second ray concentrating means for concentrating the rays emitted from the first ray concentrating means as a linear narrow beam, in which both the first ray concentrating means and the second ray concentrating means are optical elements or optical systems that are odd-order aspherical, the second ray concentrating means is located at a position where the rays are concentrated by the first ray concentrating means, and the first ray concentrating means and the second ray concentrating means have different shapes.

(2) The narrow beam generating device according to (1), in which both the first ray concentrating means and the second ray concentrating means are constituted of optical elements having an axicon effect.

(3) The narrow beam generating device according to (1) or (2), in which when the first ray concentrating means and the second ray concentrating means are each formed from one refractive surface, the first ray concentrating means and the second ray concentrating means are constituted as an integral element, and when the first ray concentrating means and the second ray concentrating means each have one reflective surface, the reflective surface of the first ray concentrating means has a hole portion formed to allow the linear narrow beam, concentrated by the second ray concentrating means, to pass through.

Effects of the Invention

The present invention can provide a narrow beam generating device that can generate a linear narrow beam having a diameter of a prescribed size or less, on the basis of light emitted from any light source, independent of the distance from an emission position.

BRIEF DESCRIPTION OF THE DRAWINGS

FIG. 1 is a schematic view showing a configuration of a narrow beam generating device according to a first embodiment of the present invention;
FIG. 2 is a schematic view showing a configuration of a narrow beam generating device according to a second embodiment of the present invention;

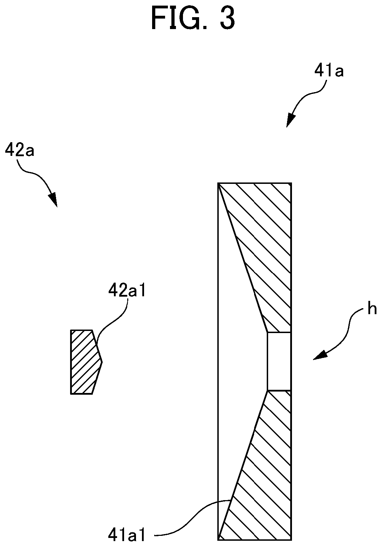

FIG. 3 is a cross sectional view along a line A-A in FIG. 2;
FIG. 4A is a perspective view showing a first ray concentrating means and a second ray concentrating means according to the second embodiment of the present invention;
FIG. 4B is a perspective view showing the first ray concentrating means and the second ray concentrating means according to the second embodiment of the present invention;
FIG. 5 is a schematic view showing a configuration of a narrow beam generating device according to a third embodiment of the present invention;
FIG. 6 is a schematic view showing a configuration of a narrow beam generating device according to a fourth embodiment of the present invention;
FIG. 7 is a schematic view comparing the effects when rays incident on an odd-order aspherical surface and an even-order aspherical surface are eccentric;
FIG. 8 shows the results of optical simulation of the narrow beam generating device according to the first embodiment;
FIG. 9 shows the results of optical simulation of the narrow beam generating device according to the second embodiment;
FIG. 10 shows the results of optical simulation of the narrow beam generating device according to the third embodiment; and
FIG. 11 shows the results of optical simulation of the narrow beam generating device according to the fourth embodiment.

PREFERRED MODE FOR CARRYING OUT THE INVENTION

Hereinafter, one embodiment of the present invention is described below with reference to the drawings. The content of the present invention is not limited by the following embodiments.

<<First Embodiment>>

<Configuration of Narrow Beam Generating Device>

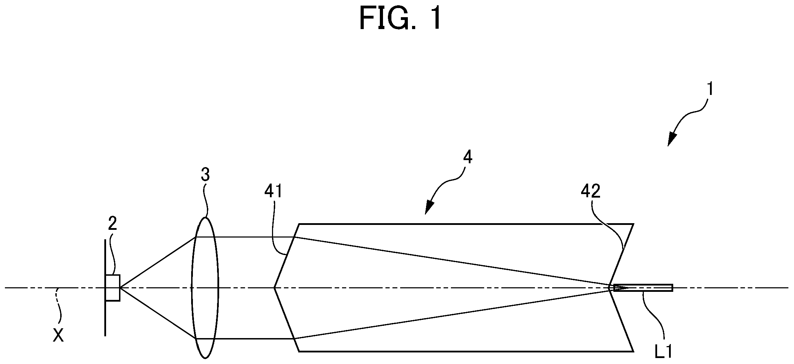

As shown in FIG. 1, a narrow beam generating device 1 according to the present embodiment includes a light source 2, a collimator optical element 3 as the light condensing means, and an optical element 4. The optical element 4 is an optical element formed by integrating a convex axicon surface 41 that is the first ray concentrating means and a concave axicon surface 42 that is the second ray concentrating means.

In the present embodiment, the collimator optical element 3 and the optical element 4 are located so that their optical axes are roughly equal to an optical axis X. Here, the optical axes of the collimator optical element 3 and the optical element 4 do not necessarily need to be in the center of the optical axis X, and there may be some axis deviation. In the narrow beam generating device 1, a narrow beam L1 is generated with a position immediately after light emission from the concave axicon surface 42 of the optical element 4 as a start point. The size of a diameter of the narrow beam L1 is principally constant independent of the distance from an emission position, and the length of the narrow beam L1 is infinity in principle.

The applications of the narrow beam generating device 1 that can generate the narrow beam L1 are not particularly limited, and the narrow beam generating device 1 is applicable to various types of projectors, displays, laser processing devices, lighting devices, optical communication devices, optical memory devices, optical information processing devices, and the like. Particularly, the beam diameter of the narrow beam L1 can be a prescribed size or less, the narrow beam L1 is hardly divergent at a given length (up to infinity in principle) in an optical axis X direction, and the beam diameter of narrow beam L1 is mostly constant independent of the distance from the emission position. This makes it unnecessary to adjust the focal position. For this reason, the narrow beam generating device 1 is preferably applicable to retinal scan displays. The beam diameter of the narrow beam L1 can be, for example, 50 $\mu$m or less, 20 $\mu$m or less, and 10 $\mu$m or less.

In the case of applying the narrow beam generating device 1 to photolithography, in addition to the above application, direct drawing of high-definition photo masks can be realized without a precise focus mechanism. In the case of applying the narrow beam generating device 1 to laser processing devices, laser processed holes, which had to be tapered in the past, can be formed to have a uniform depth. Furthermore, the energy of the narrow beam L1 per end surface area is very high as compared with conventional lasers, and therefore when the narrow beam generating device 1 is applied to shearing devices, sufficient processing can be performed even with a laser oscillator that has a smaller output than conventional lasers. In addition, when the narrow beam generating device 1 is applied to sensing technology, high-resolution sensing is possible without depending on the sensing distance. In the case of coupling the narrow beam generating device 1 and an optical fiber, there is a possibility that the coupling efficiency for inputting light to single-mode optical fibers can be improved to 90% or more, as compared with conventional coupling efficiency of about 30%.

The light source 2 may be any light source, such as a semiconductor laser (LD), an LED, or a surface light source. The light source 2 is not particularly limited, and any light source can be used since neither spatial coherence nor temporal coherence is required. The light source 2 may be able to adjust and modulate the light intensity by a light source driver that serves as a power source, or the like. The light source 2 may include a plurality of light sources emitting the same or different wavelengths. For example, a light source that combines light of R, G, and B using a plurality of light sources may be adopted.

The collimator optical element 3 as the light condensing means is an optical element on which light emitted from the light source 2 is incident. The collimator optical element 3 converts the incident light into parallel light that is parallel to the optical axis X, and emits the parallel light. Examples of the collimator optical element 3 as the light condensing means may include collimator lenses, mirrors, and diffraction optical elements (DOE). The diffraction optical elements, which have a fine uneven structure on the surface, can spatially branch light by utilizing the diffraction phenomenon of light and output the light with a desired pattern and shape. When a plurality of light sources 2 is provided, a plurality of collimator optical elements 3 is also provided in accordance with the number of the light sources 2. Note that collimator optical systems are used for light sources with divergent characteristics, though in the case of light sources without divergent characteristics, light may be made incident on subsequent optical systems directly or by using beam expanders without using the collimator optical systems, depending on the subsequent optical systems. Note that the light condensing means is not limited to a means for generating perfect collimated light, and any light condensing means may be used as long as divergent light rays from the light source are condensed within a prescribed three-dimensional angle range.

The optical element 4 is an optical element on which the parallel light generated by the collimator optical element 3 is incident. The optical element 4 includes the convex axicon surface 41 that is the first ray concentrating means and the concave axicon surface 42 that is the second ray concentrating means different in shape from the convex axicon surface 41. Both the convex axicon surface 41 and the concave axicon surface 42 are refractive surfaces that are odd-order aspherical. The parallel light is incident on the convex axicon surface 41, and the narrow beam L1 is emitted from the vertex of the concave axicon surface 42. As shown in FIG. 1, the convex axicon surface 41 and the concave axicon surface 42 are located so that their vertices of the axicon surfaces are on the optical axis X. The convex axicon surface 41 is located facing an incident side of the parallel light and the concave axicon surface 42 is located facing an emission side of the parallel light. The convex axicon surface 41 and the concave axicon surface 42 are a straight conical surface and a straight conical inner surface with the same vertex angle. By making the first ray concentrating means and the second ray concentrating means different in shape from each other, the narrow beam generating device 1 is configured to be compact as compared with, for example, the case where the first ray concentrating means and the second ray concentrating means are both convex axicon surfaces.

The convex axicon surface 41 has a function of concentrating the parallel light generated by the collimator optical element 3 into an area narrower than the incident light flux. The concave axicon surface 42 is located at the position where the rays are concentrated by the convex axicon surface 41. Specifically, the vertex of the conical inner surface of the concave axicon surface 42 is located in the vicinity of a portion farthest from the position where the parallel light is concentrated by the convex axicon surface 41 (the position where a Bessel beam is generated). As a result, outermost rays of the light flux incident with some extent on the convex axicon surface 41 are concentrated by the convex axicon surface 41, and the concentrated narrow beam L1 parallel to the optical axis X is emitted from the vertex of the concave axicon surface 42. Since the outermost rays are concentrated into the vicinity of the optical axis X, the narrow beam L1 with strong light intensity is emitted.

In the present embodiment, the optical element 4 is an optical element constituted of a material having light transparency, such as glass, and is configured by integrating the convex axicon surface 41 that is the first ray concentrating means and the concave axicon surface 42 that is the second ray concentrating means. In addition to the above, an optical element having the convex axicon surface 41 and an optical element having the concave axicon surface 42 may be installed as separate optical elements, though these optical elements are preferably configured as an integrated optical element, like the optical element 4. This makes it unnecessary to adjust the positions of the convex axicon surface 41 and the concave axicon surface 42 as compared with the case where separate optical elements are installed, and therefore the narrow beam L1 having a desired beam diameter can be generated with high accuracy. In addition, the configuration of the narrow beam generating device 1 can be simplified.

<Results of Optical Simulation>

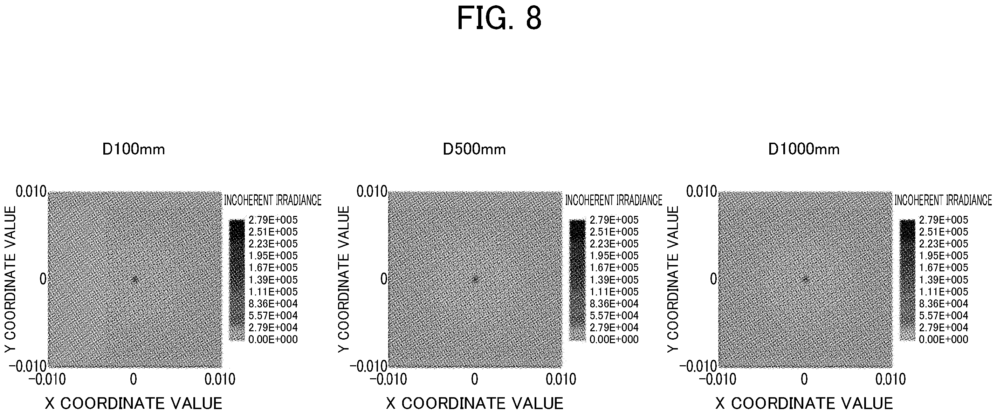

FIG. 8 shows the results of an optical simulation performed using the narrow beam generating device 1 according to the first embodiment and optical design software ZEMAX (registered trademark) (manufactured by ZEMAX Development Corporation). FIG. 8 shows the results of outputting irradiance distribution in the above optical simulation, with detectors installed on a plane perpendicular to the optical axis X at respective positions where distance D from the concave axicon surface 42 was 100 mm, 500 mm, and 1000 mm. In the output results of FIG. 8, vertical and horizontal axes correspond to a detector size (20 $\mu$m on each side) (unit: mm), and the center (vertical axis = 0, horizontal axis = 0) corresponds to the position of the optical axis X. Table 1 below shows the details of each component of the narrow beam generating device 1 according to the first embodiment.

[Table 1]

| Surface | Shape | Surface distance (mm) | Refractive index | Aspherical coefficient value |
|---|---|---|---|---|
| Convex axicon surface 41 (First ray concentrating means) | Aspherical surface | 21.23 | 1.51852 | $\alpha 1 = 0.36397$ |
| Concave axicon surface 42 (Second ray concentrating means) | Aspherical surface | - | 1 | $\alpha 1 = 0.36397$ |

The aspherical coefficient values in Table 1 are aspherical coefficient values for aspherical shapes defined by the following equation (1) (quadratic surface-based aspheric equation):

$$Z = \{H^2/R\} / [1 + \{1 - (1 + k)(H/R)^2\}^{1/2}] + \Sigma\alpha_n H^n \quad (1)$$

In equation (1), Z represents a displacement amount (sag amount) of a surface parallel to the optical axis, H represents the height of an incident ray, R represents a curvature radius of a base surface, K represents a conic constant,

and $\alpha_n$ represents an aspherical coefficient relative to n-th power of H. The surface interval (mm) in Table 1 indicates an interval to a next surface on the optical axis X in an incident direction. The refractive index in Table 1 refers to the refractive index (relative refractive index) of a medium on the emission side relative to the refractive index of the medium on the incident side.

As shown in FIG. 8, it is clear from the results that the narrow beams generated by the narrow beam generating device 1 have diameters maintained to be a prescribed diameter of a few μm or less independent of the distance from the emission position.

Hereinafter, other embodiments of the present invention are described. Description of the components similar to those of the first embodiment may be omitted.

<<Second Embodiment>>

<Configuration of Narrow Beam Generating Device>

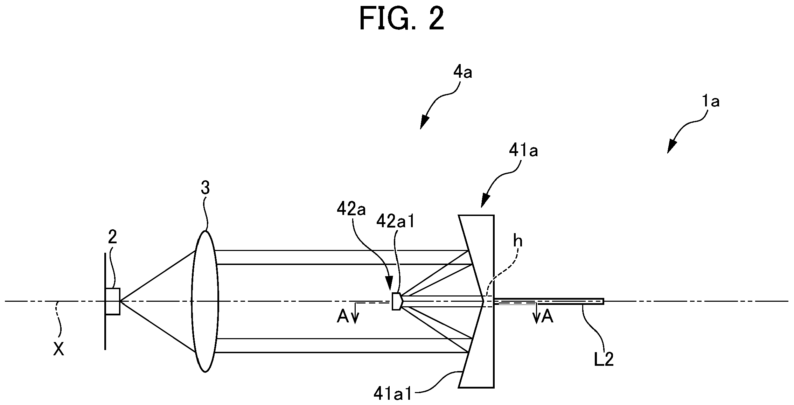

As shown in FIG. 2, a narrow beam generating device 1a according to a second embodiment includes the light source 2, the collimator optical element 3 as the light condensing means, and an optical element 4a. The optical element 4a includes an axicon mirror 41a and an axicon mirror 42a. The components other than the optical element 4a in the narrow beam generating device 1a are the same as those of the narrow beam generating device 1 according to the first embodiment.

In the narrow beam generating device 1a according to the present embodiment, the first ray concentrating means and the second ray concentrating means are constituted of reflective surfaces that are odd-order aspherical. This makes it possible to generate a narrow beam L2 having stable characteristics independent of the wavelength of the incident light.

The axicon mirror 41a has a concave axicon surface 41a1 as the first ray concentrating means, and the axicon mirror 42a has a convex axicon surface 42a1 as the second ray concentrating means. Both the concave axicon surface 41a1 and the convex axicon surface 42a1 are reflective surfaces that are odd-order aspherical. Parallel light generated by the collimator optical element 3 is incident on the concave axicon surface 41a1, and reflected light concentrated and reflected by the concave axicon surface 41a1 is incident on the convex axicon surface 42a1. The reflected light concentrated and reflected by the convex axicon surface 42a1 is then concentrated and emitted as a narrow beam L2 through a hole portion h formed in the axicon mirror 41a.

As shown in FIG. 2, the concave axicon surface 41a1 and the convex axicon surface 42a1 are located so that their respective vertices of the axicon surfaces are on the optical axis X. The concave axicon surface 41a1 is located facing the incident side of the parallel light generated by the collimator optical element 3, and the convex axicon surface 42a1 is located between the collimator optical element 3 and the concave axicon surface 41a1 so as to face the concave axicon surface 41a1. The concave axicon surface 41a1 and the convex axicon surface 42a1 are a straight conical surface or a straight conical inner surface with the same vertex angle, and the convex axicon surface 42a1 is smaller in bottom area than the concave axicon surface 41a1.

The concave axicon surface 41a1 has a function of reflecting the parallel light generated by the collimator optical element 3 and concentrating the parallel light into an area narrower than the incident light flux. The vertex of the convex axicon surface 42a1 is located at the position where the parallel light is concentrated by the concave axicon surface 41a1. As a result, outermost rays of the light flux incident with some extent on the concave axicon surface 41a1 are concentrated by the concave axicon surface 41a1 and are incident on the convex axicon surface 42a1. The rays concentrated by reflection are then emitted from the vertex of the convex axicon surface 42a1 as the narrow beam L2 parallel to the optical axis X. Since the outermost rays are concentrated in the vicinity of the optical axis X, the narrow beam L2 with strong light intensity is emitted.

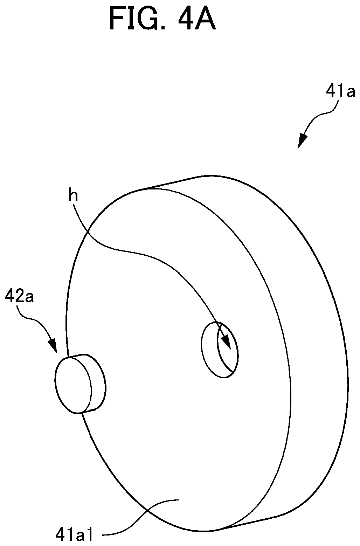

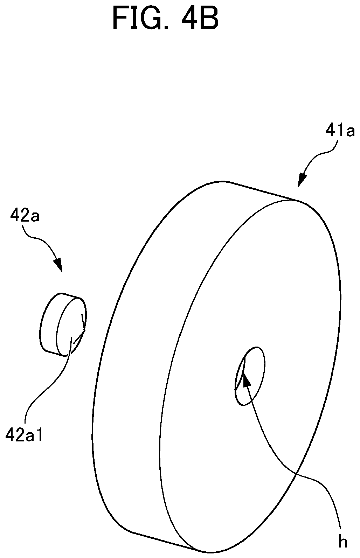

In the axicon mirror 41a, the hole portion h is formed at the position corresponding to the vertex of the conical inner surface of the concave axicon surface 41a1, as shown in FIGS. 4A and 4B. The hole portion h is a hole portion that allows the narrow beam L2 emitted from the vertex of the convex axicon surface 42a1 to pass through, and the diameter of the hole portion h is sufficiently larger than the diameter of the narrow beam L2. The diameter of the hole portion h is not particularly limited, and can be equal to or less than a projected shape of the axicon mirror 42a in an optical axis X direction, for example. With the above configuration, the parallel light generated by the collimator optical element 3 is blocked by the axicon mirror 42a. Accordingly, the parallel light does not directly reach the hole portion h, and only the narrow beam L2 concentrated by the convex axicon surface 42a1 reaches the hole portion h. This makes it possible to make the diameter of the narrow beam L2 equal to or less than the prescribed size. The narrow beam generating device 1a is configured so that the axicon mirror 41a includes the hole portion h and the narrow beam L2, emitted from the axicon mirror 42a, is emitted through the hole portion h. This allows the narrow beam generating device 1a to have a compact configuration.

<Results of Optical Simulation>

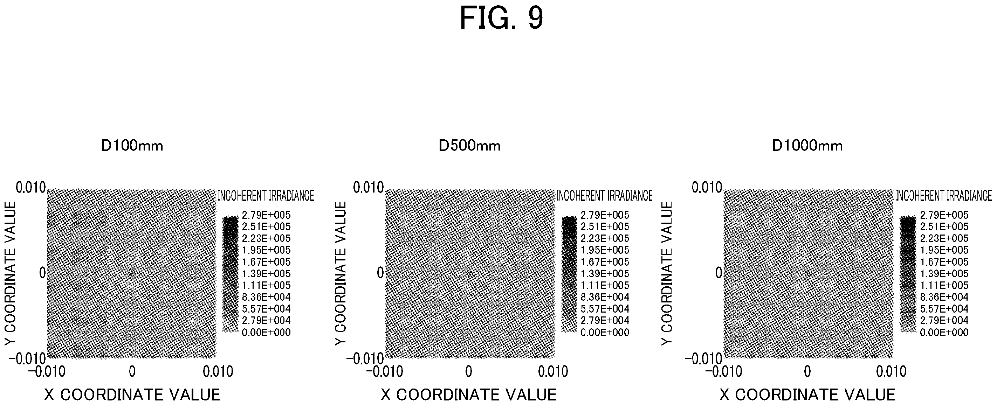

FIG. 9 shows the results of an optical simulation performed using the narrow beam generating device 1a according to the second embodiment and the optical design software ZEMAX (registered trademark) (manufactured by ZEMAX Development Corporation). FIG. 9 shows the results of outputting irradiance distribution in the above optical simulation, with detectors installed on a plane perpendicular to the optical axis X at respective positions where distance D from the hole portion h was 100 mm, 500 mm, and 1000 mm. In the output results of FIG. 9, vertical and horizontal axes correspond to a detector size (20 μm on each side) (unit: mm), and the center (vertical axis = 0, horizontal axis = 0) corresponds to the position of the optical axis X. Both the conical inner surface of the concave axicon surface 41a1 and the conical surface of the convex axicon surface 42a1 had vertex angles of 20 degrees, the distance between the vertex angles was 3 mm, the diameter of a bottom surface of the conical inner surface of the concave axicon surface 41a1 was 6 mm, and the diameter of a bottom surface of the conical surface of the convex axicon surface 42a1 was 1 mm. Table 2 below shows the details of each component of the narrow beam generating device 1a according to the second embodiment.

[Table 2]

| Surface | Shape | Surface distance (mm) | Refractive index | Aspherical coefficient value |
|---|---|---|---|---|
| Convex axicon surface 41a1 (First ray concentrating means) | Aspherical surface | 3 | - | $\alpha 1$= -0.36397 |
| Concave axicon surface 42a1 (Second ray concentrating means) | Aspherical surface | - | - | $\alpha 1$= -0.36397 |

As shown in FIG. 9, it is clear from the results that the narrow beams generated by the narrow beam generating device 1a have a diameter maintained to be a prescribed diameter of a few μm or less, independent of the distance from the emission position.

<<Third Embodiment>>

<Configuration of Narrow Beam Generating Device>

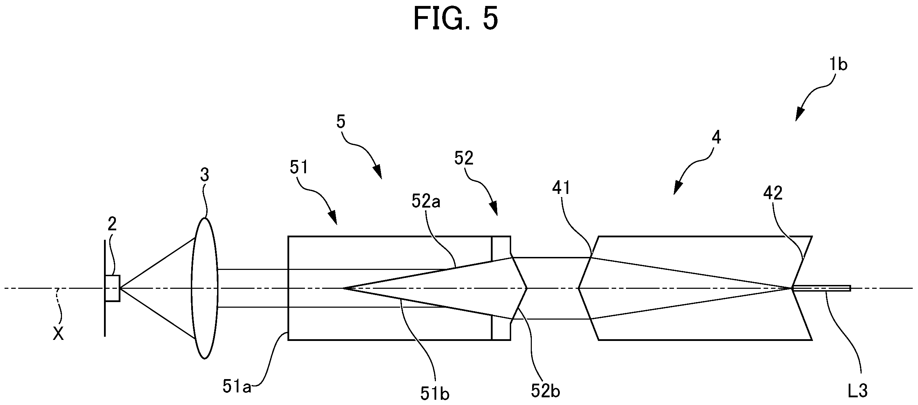

A narrow beam generating device 1b according to a third embodiment includes, as shown in FIG. 5, the light source 2, the collimator optical element 3 as the light condensing means, a critical angle axicon element 5, and the optical element 4. The components other than the critical angle axicon element 5 in the narrow beam generating device 1b are the same as those of the narrow beam generating device 1 according to the first embodiment.

The narrow beam generating device 1b according to the present embodiment is configured so that the critical angle axicon element 5 as the annular light condensing means (annular light condensing element) is located between the collimator optical element 3 and the optical element 4. In the case of configuring the narrow beam generating device 1b without installation of the critical angle axicon element 5 (i.e., in the case of the narrow beam generating device 1 according to the first embodiment), the only light that contributes to the generation of the narrow beam is the light in the vicinity of an outer circumference of the optical element 4 as viewed from the optical axis X direction. Therefore, it is possible to generate the narrow beam, though it cannot be said that use efficiency of the incident light is high. The critical angle axicon element 5 according to the present embodiment has a function of concentrating and emitting the parallel light emitted from the collimator optical element 3 as annular light in the vicinity of the outer circumference of the optical element 4 as viewed from the direction of the optical axis X direction. As a result, the narrow beam generating device 1b can achieve the improved use efficiency of the incident light as compared with the narrow beam generating device 1 without the critical angle axicon element 5.

The critical angle axicon element 5 is constituted of an optical element 51 that is the first optical element and an optical element 52 that is the second optical element located in order from the incident side. The optical element 51 has a plane 51a located on the incident side so that the parallel light emitted from the collimator optical element 3 is perpendicularly incident thereon, and also has a concave axicon surface 51b that is a straight conical inner surface on the emission side. The optical element 52 has a convex axicon surface 52a that is a straight conical surface with the same vertex angle as the concave axicon surface 51b on the incident side, and also has a convex axicon surface 52b on the emission side. The concave axicon surface 51b and the convex axicon surface 52a are located in contact with each other.

The concave axicon surface 51b and the convex axicon surface 52a may be bonded so as to allow light transmission, with an adhesive having appropriate optical characteristics.

While the optical element 51 and the optical element 52 are both constituted of a member having light transparency, the refractive index of a material constituting the optical element 51 is different from the refractive index of the material constituting the optical element 52. Specifically, as described below, the refractive index of the materials constituting the optical element 51 and the optical element 52 and the vertex angles of the concave axicon surface 51b and the convex axicon surface 52a are set so that the light emitted from the optical element 51 propagates along the convex axicon surface 52a.

Since the materials constituting the optical element 51 and the optical element 52 are different in refractive index, the light incident on the optical element 52 from the optical element 51 is refracted according to Snell's law on the concave axicon surface 51b (convex axicon surface 52a) that is a boundary surface. Assuming that the refractive index of the material constituting the optical element 51 is N, and the refractive index of the material constituting the optical element 52 is N', light incident on the concave axicon surface 51b at an incidence angle $\theta$ is refracted at an angle $\theta'$ that satisfies the following equation (2). Here, the incidence angle $\theta$ is substantially equal to 1/2 of the vertex angle of the concave axicon surface 51b and the convex axicon surface 52a.

$$N \cdot \sin\theta = N' \cdot \sin\theta' \quad (2)$$

Here, when the incidence angle $\theta$ exceeds a so-called critical angle $\theta c$, the light incident on the optical element 52 from the optical element 51 is totally reflected on the concave axicon surface 51b (convex axicon surface 52a) that is the boundary surface. However, when the incidence angle $\theta$ = critical angle $\theta c$, the incident light on the optical element 52 from the optical element 51 propagates along the convex axicon surface 52a. In this case, the relation between the refractive index N and the refractive index N' satisfies the following equation (3). Even in the case where the incidence angle $\theta$ does not strictly match the critical angle $\theta c$, the light emitted from the optical element 51 can be concentrated in a very small area along the convex axicon surface 52a when the incidence angle $\theta$ does not exceed the critical angle $\theta c$ and is very close to the critical angle $\theta c$.

$$N \cdot \sin(\theta c) = N' \quad (3)$$

Specifically, when the optical element 51 and the optical element 52 are configured so that the critical angle $\theta c$, calculated from the refractive index of each of the materials constituting the optical element 51 and the optical element 52, is substantially equal to 1/2 of the vertex angles of the concave axicon surface 51b and the convex axicon surface 52a, the light emitted from the optical element 51 can propagate along the convex axicon surface 52a.

The light that has propagated along the convex axicon surface 52a in the optical element 52 is concentrated by the convex axicon surface 52b and emitted as annular parallel light. The annular parallel light emitted from the convex axicon surface 52b comes incident in the vicinity of the outer circumference of the optical element 4 as viewed from the optical axis X direction. As described in the first embodiment, the light incident on the optical element 4 is concentrated by the convex axicon surface 41 and is concentrated and emitted as the narrow beam L3 that is parallel to the optical axis X, from the vertex of the concave axicon surface 42.

<Results of Optical Simulation>

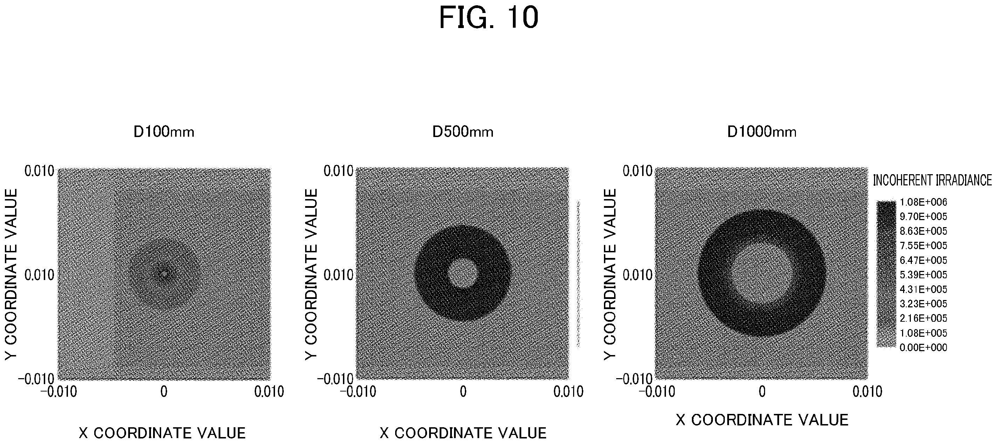

FIG. 10 shows the results of an optical simulation performed using the narrow beam generating device 1b according to the third embodiment and the optical design software ZEMAX (registered trademark) (manufactured by ZEMAX Development Corporation). FIG. 10 shows the results of outputting irradiance distribution in the above optical simulation, with detectors installed on a plane perpendicular to the optical axis X at positions where distance D from the concave axicon surface 42 was 100 mm, 500 mm, and 1000 mm. In the output results of FIG. 10, vertical and horizontal axes correspond to a detector size (20 $\mu$m on each side) (unit: mm), and the center (vertical axis = 0, horizontal axis = 0) corresponds to the position of the optical axis X. Table 3 below shows the details of each component of the narrow beam generating device 1b according to the third embodiment.

[Table 3]

| Surface | Shape | Surface distance (mm) | Refractive index | Aspherical coefficient value |
|---|---|---|---|---|
| Plane 51a | Plane | 1 | 1.7 | - |

(continued)

| Surface | Shape | Surface distance (mm) | Refractive index | Aspherical coefficient value |
|---|---|---|---|---|
| Concave axicon surface 51b (Convex axicon surface 52a) | Aspherical surface | 3.5 | 1.67418 | $\alpha 1=5.67128$ |
| Convex axicon surface 52b | Aspherical surface | - | 1 | R= -2.724e-08<br>k=-6.09342 |
| Convex axicon surface 41 (First ray concentrating means) | Aspherical surface | 4.08 | 1.7 | $\alpha 1= 0.36397$ |
| Concave axicon surface 42 (Second ray concentrating means) | Aspherical surface | - | 1 | $\alpha 1= 0.36397$ |

As shown in FIG. 10, the diameters of the narrow beams generated by the narrow beam generating device 1b were 7.0 $\mu$m, 9.2 $\mu$m, and 12.0 $\mu$m when the distance D from the emission position was 100 mm, 500 mm, and 1000 mm, respectively. From the results, it was confirmed that the narrow beams with a diameter of 12 $\mu$m or less could be obtained when the distance D from the emission position was at least 1000 mm or less. The amount of light that forms the narrow beams was 87% of the incident light, which confirmed that the use efficiency of the incident light was about 100 times better than that of the narrow beam generating device 1 according to the first embodiment.

<<Fourth Embodiment>>

<Configuration of Narrow Beam Generating Device>

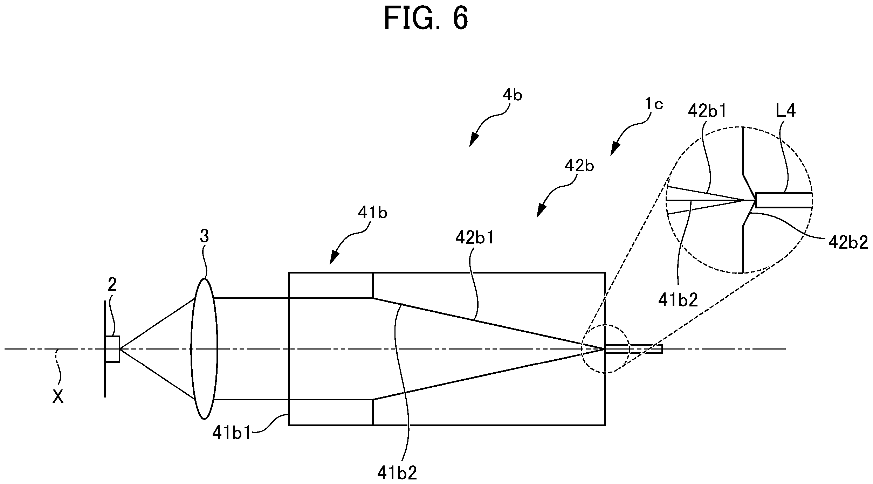

A narrow beam generating device 1c according to a fourth embodiment includes, as shown in FIG. 6, the light source 2, the collimator optical element 3 as the light condensing means, and an optical element 4b.

The optical element 4b is constituted of an optical element 41b and an optical element 42b. The optical element 41b has a plane 41b1 located on the incident side so that the parallel light emitted from the collimator optical element 3 is perpendicularly incident thereon, and also has a convex axicon surface 41b2 that is a straight conical surface on the emission side. The optical element 42b has a concave axicon surface 42b1 that is a straight conical inner surface with the same vertex angle as the convex axicon surface 41b2 on the incident side, and also has an aspherical surface 42b2 on the emission side. The convex axicon surface 41b2 and the concave axicon surface 42b1 are located in contact with each other. The convex axicon surface 41b2 and the concave axicon surface 42b1 may be bonded so as to allow light transmission, with an adhesive having appropriate optical characteristics.

The convex axicon surface 41b2 and the concave axicon surface 42b1 function as the first ray concentrating means. The optical element 4b has a configuration similar to the critical angle axicon element 5. Specifically, the optical element 41b and the optical element 42b are constituted of light transmissive members different in refractive index, and the optical element 41b and the optical element 42b are configured so that the critical angle θc, calculated from the refractive index of each of the materials constituting the optical element 41b and the optical element 42b, is substantially equal to 1/2 of the vertex angles of the convex axicon surface 41b2 and the concave axicon surface 42b1. Therefore, the parallel light incident on the optical element 41b from the plane 41b1 is concentrated when the parallel light propagates along the concave axicon surface 42b1 in the optical element 42b.

The narrow beam generating device 1c according to the present embodiment has the aspherical surface 42b2 as the second ray concentrating means. The aspherical surface 42b2 is located at the position where the rays are concentrated by the convex axicon surface 41b2 and the concave axicon surface 42b1 as the first ray concentrating means. The light concentrated by the convex axicon surface 41b2 and the concave axicon surface 42b1 is concentrated and emitted as a narrow beam L4 parallel to the optical axis X, from the vertex of the aspherical surface 42b2.

The aspherical surface 42b2 is a refractive surface that is an odd-order aspherical surface having an axicon effect and introduced with a cubic term. Using the odd-order aspherical surface as the second ray concentrating means has the advantages of being less susceptible to influence of eccentricity, having a high degree of design freedom, and being easy to manufacture, as described below.

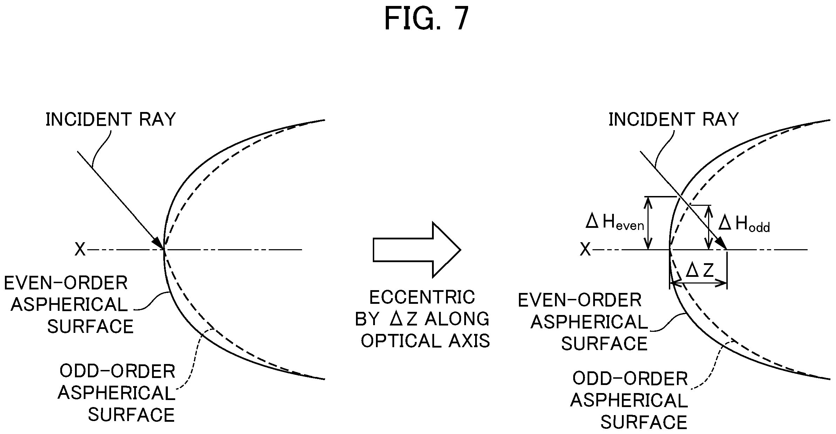

FIG. 7 is a schematic view for comparing the influence of the eccentricity of incident rays when the rays are incident on an odd-order aspherical surface and an even-order aspherical surface. An odd-order aspherical surface Zodd and an even-order aspherical surface Zeven are defined, for example, by following equations (4) and (5), respectively. In the following equations (4) and (5), H refers to an incident height.

$$Zodd = H + H^3 + H^5 \quad (4)$$

$$Zeven = H^2 + H^4 + H^6 \quad (5)$$

As shown in FIG. 7, when an incident ray is eccentric by $\Delta Z$ along the optical axis X, $\Delta$Heven > $\Delta$Hodd is always satisfied, where $\Delta$Heven represents a change amount of the incident ray on the even-order aspherical surface, and $\Delta$Hodd represents a change amount of the incident ray on the odd-order aspherical surface. The change amount on the odd-order aspherical surface is smaller than the change amount on the even-order aspherical surface. Therefore, the odd-order aspherical surface has the advantage of being less sensitive to eccentricity and less susceptible to the influence of the eccentricity than the even-order aspherical surface.

The second ray concentrating means, such as the aspherical surface 42b2, needs to emit the rays concentrated in a narrow area in parallel and in the same direction. Accordingly, it is required to design the aspherical surface that is the second ray concentrating means so that a shape change amount remains within a relatively narrow range. Examples of the shape for meeting the above requirement may include axicon surfaces. The shape of the axicon surfaces is expressed, for example, by an equation (6) below. In the equation (6) below, $\alpha$ refers to a vertex inclination angle, and H refers to an incident height.

$$Zaxicon = \tan(\alpha) \cdot H \quad (6)$$

In shape distribution of the axicon surface, a shape change dispersion value by the incident height H is 0, which means that the smaller the shape change dispersion value, the closer to the characteristics of the axicon surface. Therefore, the odd-order aspherical surfaces smaller in shape change dispersion value than the even-order aspherical surfaces are more advantageous for increasing the degree of design freedom and maintaining the axicon effect. Since primary differential values of the aspherical shape distribution determines the emission direction of the rays, reducing a fluctuation amount of the primary differential values can reduce variation of the emitted rays in a propagation direction. Moreover, since tip shapes of the odd-order aspherical surfaces are more obtuse than those of the aspherical surfaces, the odd-order aspherical surfaces have an advantage of being easy to manufacture. Particularly, the odd-order aspherical surfaces introduced with high-order terms have a larger advantage of being easy to manufacture.

<Results of Optical Simulation>

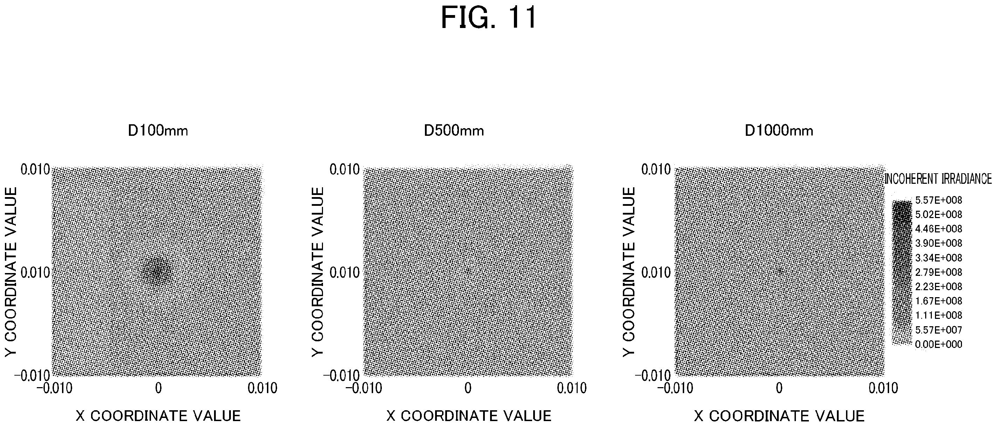

FIG. 11 shows the results of an optical simulation performed using the narrow beam generating device 1c according to the fourth embodiment and the optical design software ZEMAX (registered trademark) (manufactured by ZEMAX Development Corporation). FIG. 11 shows the results of outputting irradiance distribution in the above optical simulation, with detectors installed on a plane perpendicular to the optical axis X at respective positions where distance D from the aspherical surface 42b2 was 100 mm, 500 mm, and 1000 mm. In the output results of FIG. 11, vertical and horizontal axes correspond to a detector size (20 $\mu$m on each side) (unit: mm), and the center (vertical axis = 0, horizontal axis = 0) corresponds to the position of the optical axis X. Table 4 below shows the details of each component of the narrow beam generating device 1c according to the fourth embodiment.

[Table 4]

| Surface | Shape | Surface distance (mm) | Refractive index | Aspherical coefficient value |
|---|---|---|---|---|
| Plane 41b1 | Plane | 4 | 1.7 | - |
| Concave axicon surface 41b2 (Convex axicon surface 42b1) (First ray concentrating means) | Aspherical surface | 0.03 | 1.67417 | $\alpha 1$= -5.671 |
| Aspherical surface 42b2 (Second ray concentrating means) | Aspherical surface | - | 1 | $\alpha 1$= -0.443 $\alpha 3$= -0.106 |

As shown in FIG. 11, the beam diameters of the narrow beams generated by the narrow beam generating device 1c had very small diameters of about 2 μm on each of the detectors. It was confirmed based on this result that the narrow beams with a diameter of a prescribed size or less could be generated even when a higher-order odd-order aspherical surface was used as the second ray concentrating means.

Although preferred embodiments of the present invention have been described in the foregoing, the present invention is not limited to the embodiments disclosed and various modifications are possible.

In the third embodiment, it has been described that the narrow beam generating device 1b is configured with the critical angle axicon element 5 located between the collimator optical element 3 and the optical element 4. The present invention is not limited to the configuration described above. The same effects can be obtained by locating the critical angle axicon element 5 between the collimator optical element 3 and the optical element 4a according to the second embodiment.

EXPLANATION OF REFERENCE NUMERALS

1, 1a, 1b, 1c Narrow beam generating device
2 Light source
3 Collimator lens (collimator optical system)
41, 41a1, 41b2, 42b1 First ray concentrating means
42, 42a1, 42b2 second ray concentrating means
L1, L2, L3, L4 Narrow beam
X optical axis

## Claims

1. A narrow beam generating device, comprising:

    a light source;
    a light condensing means for collimating divergent light rays from the light source or condensing the divergent light rays within a prescribed three-dimensional angle range;
    a first ray concentrating means for concentrating at least a portion of rays emitted from the light condensing means into an area narrower than incident light flux;
    a second ray concentrating means for concentrating the rays emitted from the first ray concentrating means as a linear narrow beam; and
    an annular light condensing means located between the light condensing means and the first ray concentrating means,
    wherein

       both the first ray concentrating means and the second ray concentrating means are optical elements or optical systems that are odd-order aspherical,
       the second ray concentrating means is located at a position where the rays are concentrated by the first ray concentrating means,
       the first ray concentrating means and the second ray concentrating means have different shapes,
       the annular light condensing means comprises a first optical element and a second optical element located in order from an incident side,
       the first optical element has a plane on which light from the light condensing means is perpendicularly incident and a concave axicon surface provided on an emission side, and
       the second optical element has a convex axicon surface on the incident side.

2. The narrow beam generating device according to claim 1, wherein both the first ray concentrating means and the second ray concentrating means are constituted of optical elements having an axicon effect.

3. The narrow beam generating device according to claim 1 or 2, wherein

    when the first ray concentrating means and the second ray concentrating means are each formed from one refractive surface, the first ray concentrating means and the second ray concentrating means are constituted as an integral element, and
when the first ray concentrating means and the second ray concentrating means each have one reflective surface, the reflective surface of the first ray concentrating means has a hole portion formed to allow the linear narrow beam, concentrated by the second ray concentrating means, to pass through.

# FIG. 1

EP 4 524 643 A1

FIG. 2

EP 4 524 643 A1

# FIG. 3

41a

42a

42a1

h

41a1

# FIG. 4A

41a

h

42a

41a1

# FIG. 4B

EP 4 524 643 A1

# FIG. 5

# FIG. 6

EP 4 524 643 A1

# FIG. 7

INCIDENT RAY

X

EVEN-ORDER
ASPHERICAL
SURFACE

ODD-ORDER
ASPHERICAL
SURFACE

ECCENTRIC
BY $\Delta Z$ ALONG
OPTICAL AXIS

INCIDENT RAY

$\Delta H_{even}$      $\Delta H_{odd}$

X

$\Delta Z$

EVEN-ORDER
ASPHERICAL
SURFACE

ODD-ORDER
ASPHERICAL
SURFACE

EP 4 524 643 A1

FIG. 8

FIG. 9

D100mm

INCOHERENT IRRADIANCE

2.79E+005
2.51E+005
2.23E+005
1.95E+005
1.67E+005
1.39E+005
1.11E+005
8.36E+004
5.57E+004
2.79E+004
0.00E+000

Y COORDINATE VALUE

0.010

0

-0.010

-0.010    0    0.010

X COORDINATE VALUE

D500mm

INCOHERENT IRRADIANCE

2.79E+005
2.51E+005
2.23E+005
1.95E+005
1.67E+005
1.39E+005
1.11E+005
8.36E+004
5.57E+004
2.79E+004
0.00E+000

Y COORDINATE VALUE

0.010

0

-0.010

-0.010    0    0.010

X COORDINATE VALUE

D1000mm

INCOHERENT IRRADIANCE

2.79E+005
2.51E+005
2.23E+005
1.95E+005
1.67E+005
1.39E+005
1.11E+005
8.36E+004
5.57E+004
2.79E+004
0.00E+000

Y COORDINATE VALUE

0.010

0

-0.010

-0.010    0    0.010

X COORDINATE VALUE

# FIG. 10

EP 4 524 643 A1

D100mm

D500mm

D1000mm

INCOHERENT IRRADIANCE

1.08E+006
9.70E+005
8.63E+005
7.55E+005
6.47E+005
5.39E+005
4.31E+005
3.23E+005
2.16E+005
1.08E+005
0.00E+000

# FIG. 11

# EP 4 524 643 A1

| | INTERNATIONAL SEARCH REPORT | International application No. |
|---|---|---|
| | | **PCT/JP2023/016072** |

**A. CLASSIFICATION OF SUBJECT MATTER**

*G02B 27/09*(2006.01)i
FI: G02B27/09

According to International Patent Classification (IPC) or to both national classification and IPC

**B. FIELDS SEARCHED**

Minimum documentation searched (classification system followed by classification symbols)

G02B27/00-30/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 4577937 A (CLEGG, John E.) 25 March 1986 (1986-03-25)<br>column 1, line 6 to column 2, line 39, fig. 1, 2 | 1-3 |
| A | US 4333713 A (CLEGG, John E.) 08 June 1982 (1982-06-08)<br>column 1, line 5 to column 2, line 66, fig. 1 | 1-3 |
| A | US 5113244 A (CURRAN, Mark E.) 12 May 1992 (1992-05-12)<br>column 1, line 45 to column 4, line 67, fig. 1-3 | 1-3 |
| A | US 2882784 A (TOFFOLO, Dominic S.) 21 April 1959 (1959-04-21)<br>column 1, line 14 to column 4, line 73, fig. 1 | 1-3 |
| A | US 4325612 A (CLEGG, John E.) 20 April 1982 (1982-04-20)<br>entire text, fig. 1, 2 | 1-3 |

☐ Further documents are listed in the continuation of Box C. ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

25

International application No.

**PCT/JP2023/016072**

| Patent document cited in search report | | | Publication date (day/month/year) | Patent family member(s) | Publication date (day/month/year) |
|---|---|---|---|---|---|
| US | 4577937 | A | 25 March 1986 | (Family: none) | |
| US | 4333713 | A | 08 June 1982 | (Family: none) | |
| US | 5113244 | A | 12 May 1992 | (Family: none) | |
| US | 2882784 | A | 21 April 1959 | (Family: none) | |
| US | 4325612 | A | 20 April 1982 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009533715 W
- JP H11064782 A
- JP H10239632 A